# EUROPEAN PATENT SPECIFICATION

(11) **EP 2 938 419 B1**
(45) Date of publication and mention of the grant of the patent: **05.08.2020**
(21) Application number: 13811366.7
(22) Date of filing: 19.12.2013
(51) Int. Cl.: B01D 29/54

(54) **WIND TURBINE COMPRISING A FLUID BASED SYSTEM**
WINDTURBINE MIT EINEM FLUID SYSTEM
ÉOLIENNE COMPRENANT UN SYSTÈME À BASE DE FLUIDE

(30) Priority: 28.12.2012 DK 201270828
(43) Date of publication of application: 04.11.2015
(73) Proprietor: Vestas Wind Systems A/S, 8200 Aarhus N (DK)
(72) Inventor: KORSGAARD NIELSEN, Thomas, DK-7100 Vejle (DK)
(74) Representative: Vestas Patents Department
(86) International application number: PCT/DK2013/050449
(87) International publication number: WO 2014/101920

(56) References cited:
- EP-A2- 2 184 486
- CN-U- 201 739 100
- US-A- 5 217 606
- US-A1- 2012 006 740

## Description

### FIELD OF THE INVENTION

The present invention relates to a wind turbine comprising a fluid based system with a filter arrangement for filtering a working fluid for a point of use in a wind turbine, such as a lubrication or cooling system, e.g. for a gearbox or for a hydraulic system of the wind turbine. More specifically, the invention relates to a wind turbine comprising a fluid based system with a fluid circuit configured to direct the working fluid in an upstream direction from a source to the point of use, and a pump arranged in the upstream circuit to provide a fluid flow in the upstream direction.

### BACKGROUND OF THE INVENTION

A wind turbine (also referred to as a "wind turbine generator" or WTG) includes moving parts that require lubrication and cooling. For example, blade bearings, shaft bearings, and drivetrain components such as the gearbox typically require some form of lubrication to help reduce friction and wear. A wind turbine also includes mechanical systems whose operation is largely dependent upon a pressurized hydraulic fluid. Examples include mechanical brake systems, which may have hydraulically-actuated calipers for bringing the drivetrain and rotor to a standstill, and pitch systems, which may have one or more hydraulic cylinders for rotating the blades about their respective axes. There are also cooling systems in wind turbines for gearboxes, generators, and other components.

The lubrication, hydraulic, and cooling systems associated with these parts and mechanical systems include fluid circuits for controlling the flow of the working fluid (i.e., the lubricant or, hydraulic fluid, or coolant). Components within the fluid circuits are subject to wear from contaminants in the working fluid, which may become more contaminated with wear particles and other debris during use. As a result, the fluid circuits typically require filters to remove contaminants and increase component life.

Filters are often located in the main fluid circuit of the systems. Such filters are generally referred to as "inline" filter arrangements. Additionally, many fluid-based systems in wind turbines include a relatively fine filter in a fluid circuit separate from the main circuit. This filter is generally referred to as an "offline" filter arrangement and it is intended to remove the finest wear particles and is typically an independent, self-contained unit housed in a separate housing and functioning via a separate pump.

Although this conventional arrangement is generally satisfactory in many instances, it presents several challenges. For example, the addition of a separate offline filter arrangement increases the number of fluid circuits and overall complexity of the lubrication or hydraulic system. Additionally, replacement of several separate filter elements increases maintenance costs and downtime in operation.

Moreover, the increased number of hoses, pipes, fittings, and other components associated with the different circuits increases the corresponding risk of leakage and pollution.

Therefore, a filter arrangement that addresses these and other challenges is highly desirable.

US 5 217 606 A discloses an oil filter for providing coarse and fine filtration of lubricating oil in an internal combustion engine.

EP 2 184 486 A2 discloses a wind turbine power generation system that includes a backflushing filter system.

CN 201 739 100 U discloses a wind turbine comprising a main hydraulic circuit and an offline hydraulic circuit.

### SUMMARY OF THE INVENTION

The present invention relates to a wind turbine according to claim 1.

Since the same pump supplies both branches and since the branches comprise different filters, inline and offline filtering can be obtained by use of fewer components with reduced costs and by use of one single pump.

Particularly, the first branch is connected to the source and thereby form an offline filter in the fluid circuit. As an example, the first branch may be connected to deliver the filtered working fluid directly to the sump or reservoir of a gearbox etc.

The system may further comprise a filter housing forming a closed chamber with an inlet arranged to receive the working fluid from the pump, and with a first outlet and a separate second outlet, the second outlet being arranged in fluid communication with the point of use. The first and second filters may be arranged in the housing to receive the working fluid from the inlet and the first filter may be arranged to deliver the working fluid to the first outlet, and the second filter may be arranged to deliver the working fluid to the second outlet.

Since both filters are housed in the same filter housing and connected to a common inlet, the number of hoses, pipes, fittings, and other components can be reduced, both filters can be operated by a common pump, and downtime and maintenance costs can be reduced since both filters are replaceable simultaneously by opening one, single mutual filter housing. Additionally the reduced number of filter housings and thereby reduced number of sealingly fitted filter housing closures and pipe attachments reduces the risk of leakage and malfunctioning.

By *"fluid based system"* is herein meant any kind of fluid system which includes filters and particularly being suitable for a wind turbine. The fluid based system may particularly be a lubrication system for a gearbox.

By *"filter arrangement"* is herein meant any kind of arrangement including the mentioned first and second filters for filtering the working fluid. Particularly, the first filter may be an offline filter type which is adapted for a lower flow, and typically adapted for a flow which is lower than the flow which is needed by the component. The second filter may be an inline filter type adapted for a higher flow, typically for that flow which is needed by the component. Therefore, the second filter is used inline with the component and the first filter is used offline, i.e. independent on the use of the component.

The second filter may comprise one or more units with identical or with different characteristics. As an example, the second filter may comprise a first unit with a fine mesh, e.g. 10 µm and a second unit with a coarse mesh, e.g. 50 µm, or the second filter may comprise several units with e.g. a 10 µm mesh.

The first filter may comprise one or more units with identical or with different characteristics, and typically a generally more fine mesh than any unit of the second filter. The mesh may particularly be lower than 10µm or even lower than 5 µm, e.g. 3 µm.

The filter units of the first and second filters may generally have a β-value in the range of 100-300, such as in the size of 200.

The working fluid may typically be a lubricant such as oil of the kind generally used for lubrication and cooling purpose in a wind turbine, e.g. in the gearbox.

By *"component"* is herein meant any kind of component in need of the filtered working fluid, e.g. a gearbox, a hydraulic component, e.g. forming part of a blade pitching structure, a brake structure etc. or a component forming part of a cooling circuit etc.

The fluid circuit may typically form a loop extending from one or more reservoirs to the component and back to the reservoirs. The fluid circuit may, additionally, include additional components such as pumps, valves, nozzles, flow-resisting elements, and heat-exchangers etc.

The filter housing is connected to the fluid circuit such that the inlet receives the working fluid and the outlets deliver the filtered working fluid to the fluid circuit. The filter housing is a single entity forming a closed chamber housing both of the filters.

Each filter may comprise one or more filter elements such that the housing thereby houses a plurality of filter elements, e.g. elements having different filtering capabilities or mesh sizes etc.

To balance differences in flow resistance between the individual filter elements, a flow-resisting element may be arranged upstream or downstream of one or each of the filter elements in the housing.

Additionally, the housing may comprise valves, nozzles, pressure sensors, and other elements facilitating filtration and monitoring of filter condition etc.

For example, in a manner not shown herein, the first filter may comprise a first filter element whereas the second filter may comprise a second and a third filter element, e.g. arranged in parallel. The third filter element may e.g. not be configured to filter particles as small as those filtered by the second filter element and, therefore, have a lower internal flow resistance. This third filter element may form a bypass filter element for the second filter element.

The first and second filters may both have cylindrical shape and form concentrically arranged central passages. In one embodiment, the filters are made from tubular elements arranged one above each other such that a central passage through all elements is established.

The first outlet and the second outlet may extend concentrically in the central passage either in the same direction or in opposite directions.

The housing may comprise a base and a cover which is sealingly attachable to the base, the cover housing both the first and the second filter. The base may be formed as a block forming fittings for attaching pipes for supply and return of the working fluid to and from the fluid circuit, and may further form attachment of the filter arrangement to the wind turbine nacelle or tower etc. The first outlet may e.g. extend through the base and the second outlet may extend through the cover, or both outlets may extend through one of the base and the cover.

A separation element may be arranged between the first and second filters and/or between each of the filter elements in the housing. The separation element is adapted to separate the first outlet from the second outlet or to separate one filter element from an adjacent filter element. If the filters are cylindrical and forms a central passage, the separation elements may particularly have a size corresponding to the outer periphery, i.e. if the filters are circular in cross section, the separation elements may have a diameter corresponding to the diameter of the filters.

Centrally, the separation element(s) may either be closed or have openings providing space for a pipe extending centrally from the first filter through the second filter. This would typically be the case for a first type of separation elements adapted to be located between the first and second filters. If the separation element is closed, it facilitates outlets in opposite directions, and if the separation element has an opening for a pipe, it facilitates outlets in the same direction, e.g. through the base.

In another type of separation elements, herein referred to as *second* type, the central portion is completely open thereby allowing a flow of the working fluid from a space above the separation element to a space below the separation element. The second type of separation element would typically be used between filter elements of the same filter, e.g. between a first and a second filter element forming the second filter etc.

The system may further comprise a flow-resisting element arranged upstream or downstream of at least one of the first and second filters. The flow-resisting element may e.g. be a valve or nozzle. Particularly, the flow-resisting element may have a characteristic whereby a flow rate of the working fluid through the flow-resisting element is less influenced by variations than the flow rate through the first or second filter. In one example, a flow-resisting element constituted by a nozzle is located up- or downstream the first filter, and it is made such that a change in pressure has a lower impact on the flow rate through the nozzle than the change in pressure has on the flow rate through the first filter. In that way, the flow-resisting element may provide a more uniform flow rate through the first filter. A similar arrangement may be provided relative to the second filter. The flow-resisting element may form part of one or both of the aforementioned first and second types of separation element or it may form part of one or more filter elements constituting the first and/or the second filter.

The first filter may be configured for flow of the working fluid between a first receiving surface and a first delivering surface; and the second filter may be configured for flow of the working fluid between a second receiving surface and a second delivering surface. In this setup, the first receiving surface may be arranged in extension to the second receiving surface and/or the first delivering surface may be arranged in extension to the second delivering surface.

### BRIEF DESCRIPTION OF THE DRAWINGS

Fig. 1 is a perspective view of one embodiment of a wind turbine;
Fig. 2 is a perspective view, partially cut-away, showing components located in a nacelle of the wind turbine of Fig. 1;
Fig. 3 is a diagram of a prior-art wet sump lubrication system for a transmission of a wind turbine;
Fig. 4 is a diagram of a prior-art dry sump lubrication system for a transmission of a wind turbine;
Fig. 5 is a diagram illustrating one embodiment of a filter arrangement for dry sump lubrication system for a transmission of a wind turbine;
Figs. 6 and 7 illustrate details of an alternative flow restricting valve in the system illustrated in Fig. 5;
Figs. 8-10 illustrates a cross sectional view of three different embodiments of a filter arrangement according to the invention;
Fig. 11 illustrates a set of components for making a filter arrangement according to the invention;
Fig. 12 illustrates different embodiments of separation elements;
Figs. 13, 14 illustrate filter assemblies including the separation elements from Fig. 12; and
Figs. 15, 16 illustrate diagrams of alternative embodiment of the system illustrated in Fig. 8;

### DETAILED DESCRIPTION

Further scope of applicability of the present invention will become apparent from the following detailed description and specific examples. However, it should be understood that the detailed description and specific examples, while indicating preferred embodiments of the invention, are given by way of illustration only, since various changes and modifications within the scope of the invention will become apparent to those skilled in the art from this detailed description.

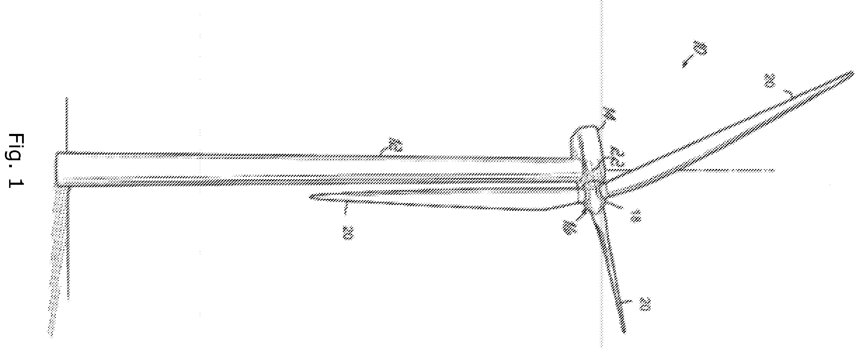

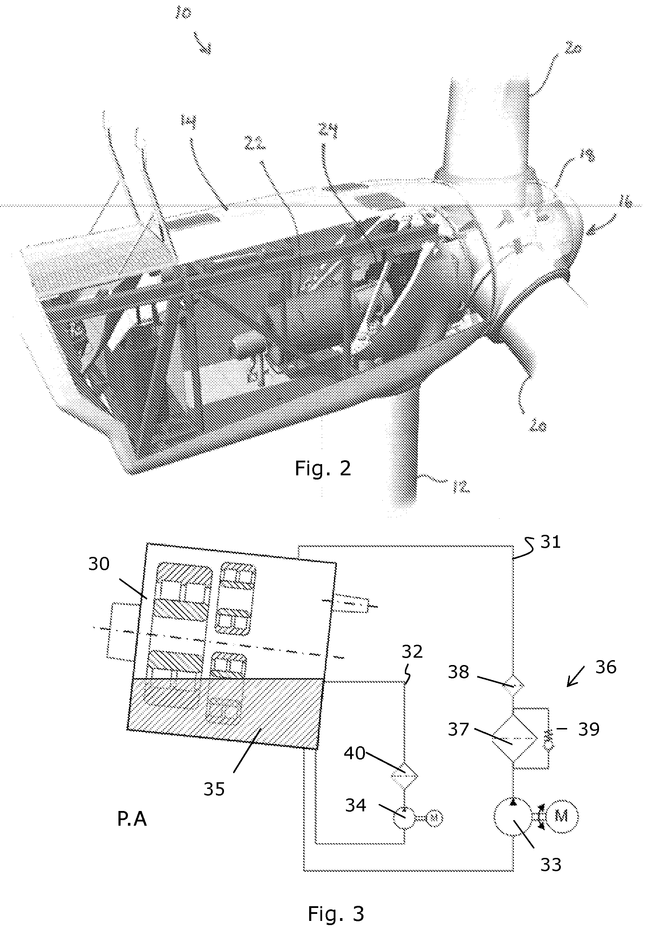

Figs. 1 and 2 show one embodiment of a wind turbine 10. The wind turbine generally comprises a tower 12, a nacelle 14 supported by the tower 12, and a rotor 16 attached to the nacelle 14. The rotor 16 includes a hub 18 rotatably mounted to the nacelle 14 and a set of blades 20 coupled to the hub 18. The blades 20 convert the kinetic energy of the wind into mechanical energy used to rotate the shaft of a generator 22 via a drivetrain 24, as is conventional.

The wind turbine 10 further includes several fluid-based systems that relate to different aspects of its operation. For example, the drivetrain 24 includes a lubrication system (not shown) for supplying oil to its components. A hydraulic system (not shown) may also be provided for supplying hydraulic fluid (e.g., pressurized oil) to one or more hydraulic cylinders that pitch the blades 20 about their respective axes. Cooling systems (not shown) for components of the drivetrain 24 or the generator 22 are also typically present. The description below, however, focuses on a filter arrangement for fluid-based systems of a wind turbine in general and, therefore, may be applicable to other lubrication and, hydraulic, and cooling systems in the wind turbine 10.

Fig. 3 illustrates a diagram of a traditional lubrication system for a wet sump gearbox 30 of a wind turbine. The filter arrangement includes separate fluid circuits 31, 32 each including separate pumps 33, 34. The first fluid circuit 31 extends from the wet sump 35 of the gearbox, through the pump 33 to an inline filter 36 and back to the gearbox 30. The inline filter 36 comprises two filter elements 37, 38 and a bypass valve 39. The main filter element 37 is relatively fine, e.g. 10 µm, and the bypass unit 38 is coarse, e.g. 50 µm. If, for some reason, e.g. if the lubricant is cold and therefore has a higher viscosity, the resistance in the main filter element 37 becomes higher than a limit value determined by the setting of the bypass valve 39, the lubricant will bypass the main filter element via the bypass valve and enter the bypass filter 38.

The second fluid circuit 32 extends from the wet sump 35 of the gearbox, through the pump 34 and offline filter 40. The offline filter 40 thereby becomes completely separate from the inline filter arrangement.

Due to the different filter configuration, the offline filter 40 has a higher internal flow resistance than the inline filter 36 , and the use of a separate pump 34 enables setting of that pressure un the offline filter arrangement which is suitable for the finer mesh of the filter element(s).

The system, and particularly the first fluid circuit 31 may comprise a number of additional components such as a heat exchanger, valves, and nozzles etc. such elements are not illustrated in the figures.

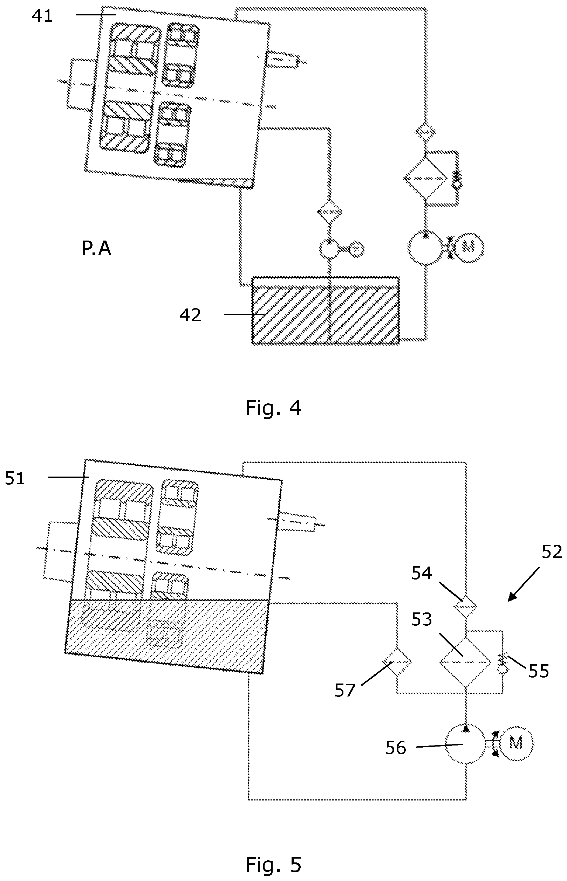

Fig. 4 illustrates a similar prior art setup for a dry sump gearbox 41 of a wind turbine. The illustration shows the difference between the wet and dry sump gearboxes being the use of a separate reservoir 42, or the use of the wet sump 35 in the gearbox for storing the lubricant.

The following figures all relates to a lubrication system of a wet or dry sump gearbox and thereby illustrate by way of examples a fluid based system with a filter arrangement, or a filter arrangement according to the invention.

In the detailed description, the claimed first filter is described as an *"offline"* filter and the second filter is described as an *"inline"* filter.

The invention may relate equally to wet and dry sump gearboxes. As described already previously, the invention may apply also to other components than gearboxes, i.e. generally to components in need for a filtered working fluid.

Fig. 5 illustrates a diagram of a lubrication system for a wet sump gearbox 51 of a wind turbine. The lubrication system includes a filter arrangement with an inline filter 52 comprising two filter elements 53, 54, one filter element 54 being a bypass filter element which can bypass the main filter element 53 via the bypass valve 55. The inline filter 52 corresponds essentially to the inline filter 36 in Fig. 3.

The filter is in a fluid circuit where the working fluid or lubricant is driven by a single pump 56. The filter arrangement also includes an offline filter 57, in this case constituted by a single filter element. The offline filter 57 is driven by the same pump 56. The offline filter has a finer mesh and is configured for a lower flow rate than the inline filter.

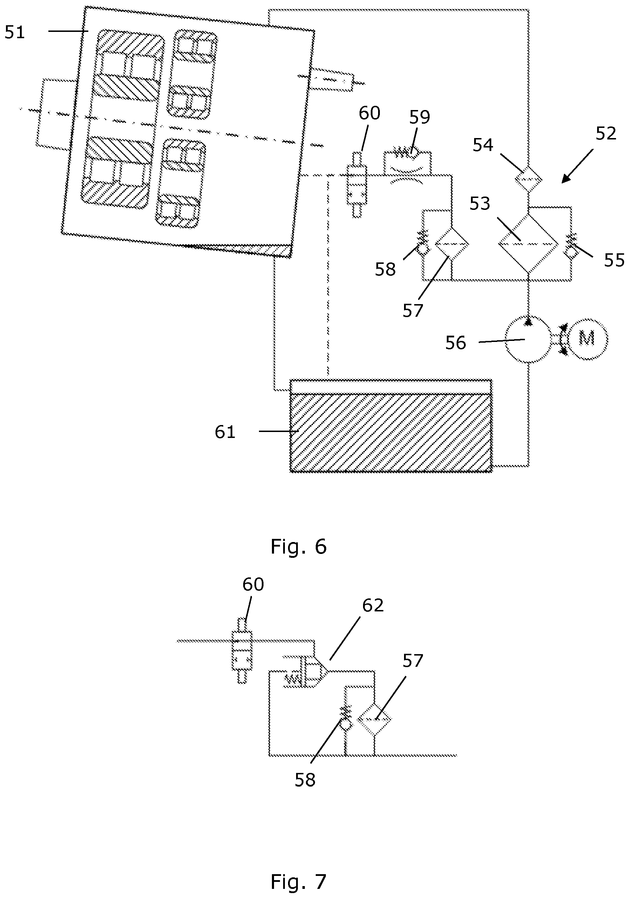

Fig. 6 illustrates a diagram of a lubrication system essentially similar to the one illustrated in Fig. 5 but with a number of additional components added to facilitate filtering by the offline filter 57.

The bypass valve 58 is added to allow bypassing of the offline filter 57 in case the pressure difference over the offline filter becomes too high.

The flow resisting element 59, in this case constituted by a nozzle, is added to provide a more constant flow rate through the offline filter. More particularly, a nozzle or a vale is generally less influenced by the pressure and therefore defines a more constant flow rate for within a specific pressure range. By inserting such a flow resisting element in serial with the offline filter, the flow rate through the filter becomes more constant.

The switch 60 is added to allow switching the offline filter in and out. As an example, it may be decided to switch out the filter during startup. The switch 60 may be controlled by a control system depending on the viscosity of the working fluid, the temperature of the working fluid, or simply depending on the duration since last startup.

Fig. 7 illustrates a diagram of an alternative to the flow resisting nozzle 59 illustrated in Fig. 6. In Fig. 7, the flow resisting element is constituted by a flow control valve 62 which reacts on a pressure between the pump 56 and the offline filter.

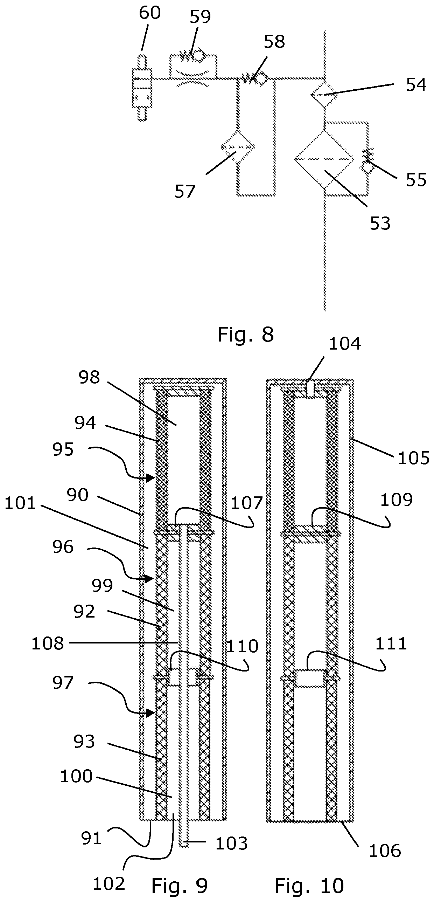

Fig. 8 illustrates a diagram of an embodiment, where the offline filter receives working fluid which has been filtered initially by the inline filter, i.e. the working fluid is taken upstream of the inline filter.

Figs. 9 and 10 illustrate a layout of a filter arrangement for a wind turbine. The filter arrangement comprises a filter housing forming a closed chamber. In Fig. 9, only a cover 90 of the housing is illustrated. The cover has an open lower end 91 which joins with a block or base (not shown).

The housing houses both an inline filter and an offline filter. In the disclosed embodiment, the inline filter is constituted by the filter elements 92, 93 and the offline filter is constituted by the filter element 94. The filter elements have cylindrical shape with coextending first, second, and third outer surfaces 95, 96, 97 and with concentrically arranged central passages 98, 99, 100. The filter elements extend between the outer surfaces and the central passages and have a mesh size which determines the size of particles which are filtered.

The offline filter is constituted by an element having a smaller mesh size than the mesh size of the filter elements which constitute the inline filter.

The housing forms an inlet arranged to receive a working fluid and extending upwardly in the conduit 101 between an inner surface of the cover 90 and the outer surfaces 95, 96, 97 of the filter elements.

The housing forms first and second outlets 102, 103 extending concentrically in, or being formed by, the central passage of at least some of the filter elements.

In the embodiment of Fig. 9, the first and second outlets extend in the same direction downwards through the base (not illustrated), and in the embodiment of Fig. 10, the first outlet 104 extends upwardly through the cover 105 which has an opening in the top. The second outlet 106 extends downwards through the base (not illustrated).

The inline and offline filters are separated in the housing by a first type of separation element. In Fig. 9, the separation element 107 forms an opening for the pipe 108 which forms the outlet 103. In Fig. 10, the separation element 109 has a closed central portion providing complete separation between the outlets.

The two filter elements 92, 93 constituting the inline filter are separated by a second type of separation element 110, 111.

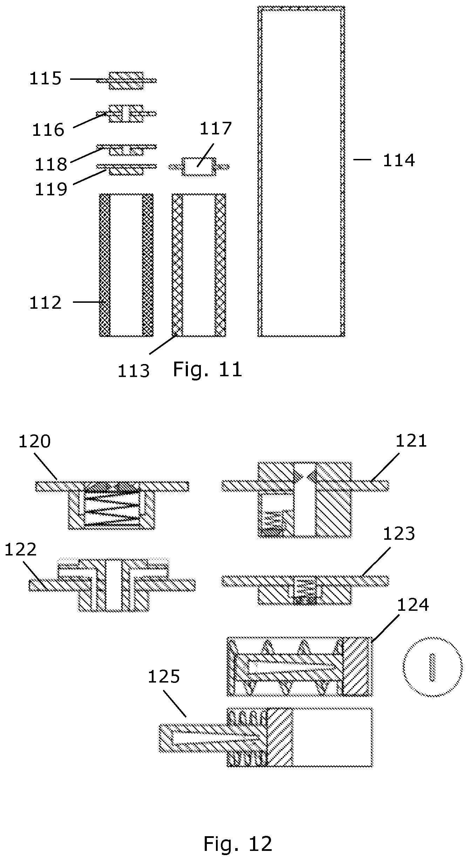

Fig. 11 illustrates an assembly system for refitting an existing filter arrangement to provide inline and offline filtration in one single combined filter housing. The assembly system includes a filter element 112 for a first filter, a filter element 113 for a second filter having a more coarse structure than the first filter element, and a cover 114 to be fitted to an existing base (not shown).

The assembly system further comprises at least one separation element, e.g. including a separation element 115, 116 of a first type adapted to be arranged between the filter elements forming first and second filters and configured to provide separation of an outlet of the first filter element from an outlet of the second filter element. The separation element 115 has a completely closed central structure whereas the separation element 116 has an opening for a pipe leading the outlet of the offline filter through a central cavity in the inline filter.

The assembly may further comprise at least one separation element 117 of a second type adapted for separation of two filter elements constituting the same filter, i.e. constituting both an inline or an offline filter. This separation element has a large opening allowing flow of the working fluid from a space above the separation element to a space below the separation element.

The cover 114 is illustrated with an integrated completely closed top portion. In another embodiment, the cover 14 may have an open top which can be closed by an attachable closure. The assembly may further comprise one or more closure elements 118, 119 for the cover 114 to configure the housing either for an top where the outlet from the offline filter may extend upwardly through the open top 118, or a closed top 119 adapted for a filter configuration where both the inline and offline filters have downwards outlets.

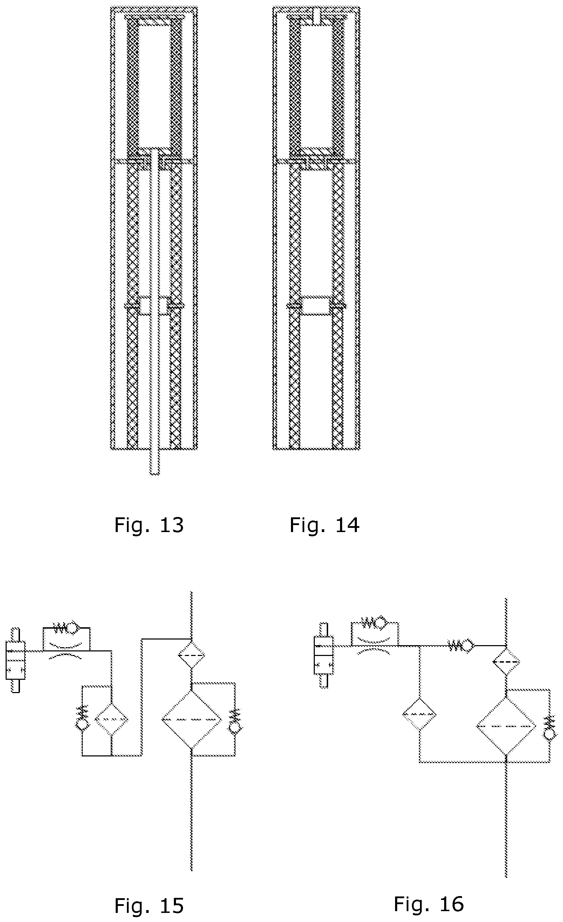

Fig. 12 illustrates different embodiments of separation elements 120-125 with integrated flow-resisting nozzles and/or one-way valves in the separation elements, and Figs. 13, 14 illustrate filter assemblies including such separation elements with integrated flow resisting nozzles.

Figs. 15, 16 illustrate diagrams of alternative embodiment of the system illustrated in Fig. 8.

In Fig. 15, the offline filter receives working fluid which has been filtered initially by the inline filter, i.e. the working fluid is taken upstream of the inline filter.

## Claims

1. A wind turbine (10) comprising a fluid based system with a filter arrangement for filtering a working fluid for a point of use in said wind turbine, the system comprising:
a fluid circuit (31, 32) configured to direct the working fluid from a source to the point of use;
a pump (56) arranged in the fluid circuit to provide a fluid flow;
a first branch of said fluid circuit configured to direct the fluid from the pump to a first filter (57); and
a second branch of said fluid circuit configured to direct the fluid from the pump to a second filter (52);
the first filter being configured to filter smaller particles than the second filter and the second filter being connected to the point of use and forming an inline filter (36) in the fluid circuit, where the first filter is an offline filter (40) arranged to deliver filtered working fluid directly to the source, and wherein said wind turbine further comprises a switch (60) for allowing switching said offline filter (57) in and out.

2. A wind turbine according to claim 1, wherein said offline filter is configured to be switched out during startup.

3. A wind turbine according to claims 1 or 2, wherein the switch (60) is configured to be controlled by a control system depending on the viscosity of the working fluid, the temperature of the working fluid, or depending on the duration since last startup.

4. A wind turbine according to any of the preceding claims, further comprising a filter housing forming a closed chamber with an inlet arranged to receive the working fluid from the pump, and with a first outlet (102, 104) and a separate second outlet (103, 106), the second outlet being arranged in fluid communication with the point of use, the first and second filters being arranged in the housing to receive the working fluid from the inlet, the first filter being arranged to deliver the working fluid to the first outlet, and the second filter being arranged to deliver the working fluid to the second outlet.

5. A wind turbine according to any of the preceding claims, where the first and second filters both have cylindrical shape and form concentrically arranged central passages.

6. A wind turbine according to claim 4 and 5, where the first outlet and the second outlet extend concentrically in the central passage.

7. A wind turbine according to any of claims 4-6, where the first and second outlets extend in opposite directions.

8. A wind turbine according to any of claims 4-7, where the housing comprises a base and a cover which is sealingly attachable to the base, the cover housing both the first and the second filter.

9. A wind turbine according to claim 8, where the first outlet extends through the base and the second outlet extends through the cover.

10. A wind turbine according to any of claims 4-9, comprising a separation element arranged between the first and second filters and separating the first outlet from the second outlet

11. A wind turbine according to any of the preceding claims, further comprising a flow-resisting element arranged upstream or downstream of at least one of the first and second filters.

12. A wind turbine according to claim 11, where the flow-resisting element forms part of the separation element.

13. A wind turbine according to claim 11, where the flow-resisting element forms part of one of the first and second filters.

## Patentansprüche

1. Windkraftanlage (10), die ein fluidbasiertes System mit einer Filteranordnung zum Filtern eines Arbeitsfluides für einen Verwendungspunkt in der Windkraftanlage umfasst, wobei das System umfasst:
einen Fluidkreislauf (31, 32), der konfiguriert ist, das Arbeitsfluid von einer Quelle zu dem Verwendungspunkt zu leiten;
eine Pumpe (56), die in dem Fluidkreislauf angeordnet ist, um einen Fluidfluss bereitzustellen;
eine erste Abzweigung des Fluidkreislaufs, die konfiguriert ist, das Fluid von der Pumpe zu einem ersten Filter (57) zu leiten; und
eine zweite Abzweigung der Fluidschaltung, die konfiguriert ist, das Fluid von der Pumpe zu einem zweiten Filter (52) zu leiten;
wobei das erste Filter konfiguriert ist, kleinere Teilchen als das zweite Filter zu filtern und das zweite Filter mit dem Verwendungspunkt verbunden ist und ein Inline-Filter (36) in dem Fluidkreislauf bildet, wo das erste Filter ein Offline-Filter (40) ist, das angeordnet ist, gefiltertes Arbeitsfluid direkt zu der Quelle zuzuführen und wobei die Windkraftanlage weiter einen Schalter (60) umfasst, um Ein- und Ausschalten des Offline-Filters (57) zu erlauben.

2. Windkraftanlage nach Anspruch 1, wobei das Offline-Filter konfiguriert ist, während Hochfahrens ausgeschaltet zu sein.

3. Windkraftanlage nach Anspruch 1 oder 2, wobei der Schalter (60) konfiguriert ist, von einem Steuerungssystem abhängig von der Viskosität des Arbeitsfluides, der Temperatur des Arbeitsfluides oder abhängig von der Dauer seit letztem Hochfahren gesteuert zu werden.

4. Windkraftanlage nach einem der vorstehenden Ansprüche, weiter umfassend ein Filtergehäuse, das eine geschlossene Kammer mit einem Einlass, der angeordnet ist, das Arbeitsfluid von der Pumpe zu empfangen, und mit einem ersten Auslass (102, 104) und einem separaten zweiten Auslass (103, 106) bildet, wobei der zweite Auslass in strömungstechnischer Verbindung mit dem Verwendungspunkt angeordnet ist, das erste und zweite Filter in dem Gehäuse angeordnet sind, um das Arbeitsfluid von dem Einlass zu empfangen, das erste Filter angeordnet ist, das Arbeitsfluid zu dem ersten Auslass zuzuführen und das zweite Filter angeordnet ist, das Arbeitsfluid zu dem zweiten Auslass zuzuführen.

5. Windkraftanlage nach einem der vorstehenden Ansprüche, wobei sowohl das erste als auch zweite Filter zylindrische Form aufweisen und konzentrisch angeordnete Mitteldurchlässe bilden.

6. Windkraftanlage nach Anspruch 4 und 5, wo der erste Auslass und der zweite Auslass sich konzentrisch in dem Mitteldurchlass erstrecken.

7. Windkraftanlage nach einem der Ansprüche 4-6, wo der erste und zweite Auslass sich in entgegengesetzten Richtungen erstrecken.

8. Windkraftanlage nach einem der Ansprüche 4-7, wo das Gehäuse eine Basis und eine Abdeckung, die dichtend an der Basis befestigt werden können, umfasst, wobei die Abdeckung sowohl das erste als auch das zweite Filter beherbergt.

9. Windkraftanlage nach Anspruch 8, wo der erste Auslass sich durch die Basis erstreckt und der zweite Auslass sich durch die Abdeckung erstreckt.

10. Windkraftanlage nach einem der Ansprüche 4-9, die ein Trennelement umfasst, das zwischen dem ersten und zweiten Filter angeordnet ist und den ersten Auslass von dem zweiten Auslass trennt.

11. Windkraftanlage nach einem der vorstehenden Ansprüche, die weiter ein Flusswiderstandselement umfasst, das stromaufwärts oder stromabwärts von mindestens einem des ersten und zweiten Filters angeordnet ist.

12. Windkraftanlage nach Anspruch 11, wo das Flusswiderstandselement Teil des Trennelements bildet.

13. Windkraftanlage nach Anspruch 11, wo das Flusswiderstandselement Teil von einem des ersten und zweiten Filters bildet.

## Revendications

1. Éolienne (10) comprenant un système à base de fluide avec un agencement de filtre pour filtrer un fluide de travail pour un point d'utilisation dans ladite éolienne, le système comprenant :
un circuit de fluide (31, 32) configuré pour diriger le fluide de travail d'une source au point d'utilisation ;
une pompe (56) agencée dans le circuit de fluide pour fournir un écoulement de fluide ;
une première branche dudit circuit de fluide configurée pour diriger le fluide de la pompe vers un premier filtre (57) ; et
une seconde branche dudit circuit de fluide configurée pour diriger le fluide de la pompe vers un second filtre (52) ;
le premier filtre étant configuré pour filtrer des particules plus petites que le second filtre et le second filtre étant connecté au point d'utilisation et formant un filtre en ligne (36) dans le circuit de fluide, où le premier filtre est un filtre hors ligne (40) agencé pour délivrer du fluide de travail filtré directement à la source, et dans laquelle ladite éolienne comprend en outre un commutateur (60) pour permettre de mettre ledit filtre hors ligne (57) en ou hors circuit.

2. Éolienne selon la revendication 1, dans laquelle ledit filtre hors ligne est configuré pour être mis hors circuit lors du démarrage.

3. Éolienne selon les revendications 1 ou 2, dans laquelle le commutateur (60) est configuré pour être commandé par un système de commande en fonction de la viscosité du fluide de travail, de la température du fluide de travail, ou en fonction de la durée depuis le dernier démarrage.

4. Éolienne selon l'une quelconque des revendications précédentes, comprenant en outre un boîtier de filtre formant une chambre fermée avec une entrée agencée pour recevoir le fluide de travail à partir de la pompe, et avec une première sortie (102, 104) et une seconde sortie séparée (103, 106), la seconde sortie étant agencée en communication fluidique avec le point d'utilisation, les premier et second filtres étant agencés dans le boîtier pour recevoir le fluide de travail à partir de l'entrée, le premier filtre étant agencé pour délivrer le fluide de travail à la première sortie, et le second filtre étant agencé pour délivrer le fluide de travail à la seconde sortie.

5. Éolienne selon l'une quelconque des revendications précédentes, dans laquelle les premier et second filtres ont tous deux une forme cylindrique et forment des passages centraux agencés concentriquement.

6. Éolienne selon les revendications 4 et 5, dans laquelle la première sortie et la seconde sortie s'étendent concentriquement dans le passage central.

7. Éolienne selon l'une quelconque des revendications 4 à 6, dans laquelle les première et seconde sorties s'étendent dans des directions opposées.

8. Éolienne selon l'une quelconque des revendications 4 à 7, dans laquelle le boîtier comprend une base et un couvercle qui peut être fixé de manière étanche à la base, le couvercle logeant à la fois le premier et le second filtre.

9. Éolienne selon la revendication 8, dans laquelle la première sortie s'étend à travers la base et la seconde sortie s'étend à travers le couvercle.

10. Éolienne selon l'une quelconque des revendications 4 à 9, comprenant un élément de séparation agencé entre les premier et second filtres et séparant la première sortie de la seconde sortie

11. Éolienne selon l'une quelconque des revendications précédentes, comprenant en outre un élément de résistance à un écoulement agencé en amont ou en aval d'au moins l'un des premier et second filtres.

12. Éolienne selon la revendication 11, dans laquelle l'élément résistant à un écoulement fait partie de l'élément de séparation.

13. Éolienne selon la revendication 11, dans laquelle l'élément résistant à un écoulement fait partie de l'un des premier et second filtres.
